# FASCICULE DE BREVET EUROPEEN

(11) **EP 2 222 529 B1**
(45) Date de publication et mention de la délivrance du brevet: **03.08.2011**
(21) Numéro de dépôt: 08864825.8
(22) Date de dépôt: 17.12.2008
(51) Int. Cl.: B62B 5/00

(54) **PROTECTEUR D'ANGLE POUR CHARIOTS D'ACHAT, AINSI QUE SON PROCÉDÉ DE FABRICATION**
ECKKANTENSCHUTZ FÜR EINKAUFSWAGEN UND HERSTELLUNGSVERFAHREN DAFÜR
ANGLE PROTECTION FOR SHOPPING CARTS AND METHOD FOR MAKING SAME

(30) Priorité: 20.12.2007 FR 0708935
(43) Date de publication de la demande: 01.09.2010
(73) Titulaire: CADDIE, 67301 Schiltigheim (FR)
(72) Inventeur: JOSEPH, Alice, F-67301 Schiltigheim Cedex (FR); LE MARCHAND, Alain, F-67116 Reichstett (FR)
(74) Mandataire: Laget, Jean-Loup
(86) Numéro de dépôt international: PCT/FR2008/052344
(87) Numéro de publication internationale: WO 2009/081041

(56) Documents cités:
- DE-A1-102005 006 710
- US-A- 4 600 204
- US-A- 4 883 281
- US-A- 5 131 669

## Description

La présente invention concerne les protecteurs d'angle pour les chariots d'achat du genre comportant un châssis monté sur des roulettes et portant une corbeille de transport composée de fils métalliques horizontaux et verticaux reliés ensemble.

Ces chariots d'achat sont mis à la disposition de la clientèle des magasins de libre-service pour transporter les produits et marchandises choisis. Afin de réduire l'encombrement des chariots d'achat en attente d'utilisation, ils sont en général emboîtables les uns dans les autres grâce au fait que la paroi verticale arrière de la corbeille est constituée par un volet articulé qui peut être soulevé automatiquement lors de l'emboîtement des chariots. Le châssis et la corbeille d'un chariot de ce genre présentent une forme se rétrécissant vers l'avant afin de permettre l'emboîtement.

Afin de réduire les conséquences des chocs et frottements générés entre les chariots lors de l'emboîtement de ceux-ci les uns dans l'autres, mais aussi pour un chariot individuel qui rencontre un obstacle sur son trajet à hauteur de la corbeille, on a déjà pensé à protéger la partie la plus exposée de la corbeille du chariot d'achat, c'est-à-dire sa paroi avant et en particulier les angles qu'elle forme avec les parois latérales respectives de la corbeille.

Un protecteur d'angle pour chariot d'achat est connu du brevet US 4 883 281 qui divulgue toutes les charactéristiques du préambule de la revendications 1. Ce protecteur d'angle est constitué d'un corps allongé en élastomère moulé. Il est disposé à chaque angle du chariot formé entre la paroi avant et l'une des parois latérales de la corbeille en s'étendant sur pratiquement toute la hauteur de celle-ci de manière à former un organe de protection extérieur qui fait fonction de pare-chocs.

Pour sa fixation aux angles de la corbeille du chariot, ce protecteur est sur sa face interne pourvu de pattes de liaison décalées en hauteur les unes par rapport aux autres et faisant saillie vers l'intérieur de la corbeille. Chaque patte comporte un trou aligné sur les trous effectués dans les autres pattes afin de recevoir une tige de liaison s'étendant verticalement à l'intérieur de la corbeille à travers les trous alignés dans les pattes.

Cette tige de liaison s'étend derrière plusieurs fils horizontaux de la corbeille de manière à les emprisonner entre le corps du protecteur et la tige de liaison. En haut et en bas, un fil horizontal est en plus emprisonné entre une paire de pattes formant entre elles un espace de réception du fil.

La tige de liaison comporte à son extrémité haute une tête reposant contre une patte supérieure et qui à son extrémité basse est enfoncée dans une rondelle à griffes prenant appui contre une patte inférieure.

Même si ce protecteur d'angle donne généralement satisfaction, il n'offre aucune protection à l'intérieur de la corbeille d'achat. Au contraire, la présence d'une partie des pattes de liaison à l'intérieur de la corbeille entraîne un risque d'accrochage involontaire de marchandises qui peuvent ainsi être endommagées, de même pour les mains des utilisateurs exposées aux parties saillantes des pattes de fixation. En outre, les anfractuosités présentées par ces éléments ne sont pas facilement nettoyables et peuvent retenir des saletés notamment dans l'espace entre la face interne du corps du protecteur et la tige de liaison.

Par ailleurs, le procédé de fabrication du protecteur selon le brevet US 4 883 281 par moulage est relativement coûteux et manque de flexibilité pour adapter le protecteur d'angle à des chariots pourvus de corbeilles dans lesquelles l'emplacement en hauteur des fils horizontaux peut varier fortement d'un modèle de chariot à un autre. Il faut donc prévoir un moule spécifique pour chaque modèle et taille de la corbeille du chariot d'achat.

On connaît aussi d'autres protecteurs d'angle, mais tous présentent des aspérités ou excroissances à l'intérieur de la corbeille du chariot d'achat, en particulier au niveau des moyens de liaison des protecteurs d'angle, ce qui entraîne les mêmes inconvénients que ceux déjà mentionnés.

Un but de l'invention est de remédier aux inconvénients des protecteurs connus en proposant un protecteur d'angle pour chariot d'achat qui offre une protection efficace aussi à intérieur de la corbeille.

Un autre but de l'invention est de proposer un chariot d'achat pourvu de protecteurs d'angle selon l'invention.

Un autre but de l'invention est de proposer un procédé de fabrication simple et flexible permettant d'adapter facilement le protecteur à des chariots de modèles et de tailles différents.

Un objet de l'invention est un protecteur d'angle pour chariot d'achat, comprenant un corps allongé dit extérieur apte à être disposé verticalement à l'extérieur d'un angle formé par une paroi avant et une paroi latérale d'une corbeille de chariot composée de fils métalliques horizontaux et verticaux, ledit corps extérieur étant adapté pour être fixé à l'angle de manière à former un organe de protection extérieur de la corbeille et étant pour sa fixation à l'angle pourvu de premiers moyens de liaison aptes à coopérer avec des deuxièmes moyens de liaison (devant être disposés à l'intérieur de la corbeille pour fixer ledit corps extérieur en emprisonnant au moins deux desdits fils métalliques horizontaux s'étendant dans l'angle à des hauteurs différentes, caractérisé par le fait que lesdits deuxièmes moyens de liaison sont disposés sur un corps allongé dit intérieur s'étendant sensiblement sur toute la hauteur de l'angle de manière à former un organe de protection intérieur de la corbeille.

Selon d'autres caractéristiques de invention :
- ledit corps extérieur comporte sur sa face intérieure des encoches longitudinalement espacées traversant perpendiculairement lesdits premiers moyens de liaison et adaptées pour recevoir des fils horizontaux de la corbeille s'étendant à des hauteurs différentes de celle-ci ;
- lesdits premiers et deuxièmes moyens de liaison sont formés par un organe mâle et un organe femelle de forme complémentaire s'étendant sensiblement sur toute la longueur desdits corps extérieur et intérieur ;
- ledit organe mâle présente à son extrémité libre un élargissement formant un organe d'ancrage ;
- ledit organe d'ancrage est globalement bombé en section ;
- ledit organe d'ancrage a globalement une forme en T en section ;
- ledit organe d'ancrage comporte sur sa périphérie un crantage ;
- l'organe mâle est apte à être introduit dans l'organe femelle et retenu à une hauteur prédéterminée à l'intérieur de ce dernier à l'aide d'un moyen de retenu ;
- ledit moyen de retenu comporte de la colle;
- ledit moyen de retenu comporte une butée à l'extrémité inférieure du protecteur ;
- ledit organe mâle est prévu sur ledit corps extérieur et que ledit organe femelle est prévu sur ledit corps intérieur ;
- ledit organe femelle est prévu sur ledit corps extérieur et que ledit organe mâle est prévu sur ledit corps intérieur ;
- ledit corps extérieur comporte au moins une alvéole s'étendant sur toute sa longueur ;
- ledit corps intérieur comporte au moins une alvéole s'étendant sur toute sa longueur ;
- lesdits corps extérieur et intérieur sont obtenus à partir de profilés extrudés.

Un autre objet de l'invention est un chariot d'achat comportant un châssis monté sur des roulettes et portant une corbeille de transport composée de fils métalliques horizontaux et verticaux reliés ensemble, la corbeille présentant des angles avant protégés par un protecteur d'angle respectif. Le protecteur d'angle de ce chariot est un protecteur d'angle tel que défini ci-dessus.

Un autre objet de l'invention est un procédé de fabrication d'un protecteur d'angle tel que défini ci-dessus, comprenant les phases consistant à :
- extruder un profilé apte à former ledit corps intérieur du protecteur d'angle et couper le profilé en longueurs déterminées adaptées à la hauteur de ladite corbeille d'un chariot d'achat ;
- extruder un profilé apte à former ledit corps extérieur du protecteur d'angle ;
- effectuer des encoches longitudinalement espacées dans le profilé formant le corps extérieur, les encoches étant adaptées pour recevoir un fil horizontal respectif d'une corbeille de chariot ;
- couper le profilé formant le corps extérieur en longueurs déterminées adaptées à la hauteur de ladite corbeille de chariot d'achat.

D'autres caractéristiques et avantages de l'invention ressortiront de la description qui va suivre de deux modes de réalisation non limitatifs de l'invention, en référence aux figures annexées dans lesquelles :
- la figure 1 est une vue en perspective d'un chariot d'achat pourvu de protecteurs d'angle selon l'invention ;
- la figure 2 est une vue partielle en perspective montrant un protecteur d'angle selon un premier mode de réalisation fixé sur une corbeille de chariot d'achat;
- la figure 3 est une vue en perspective montrant le corps extérieur allongé du protecteur d'angle de la figure 2 ;
- la figure 4 est une vue d'extrémité du corps extérieur du protecteur d'angle de la figure 2 ;
- la figure 5 est une vue d'extrémité du corps intérieur allongé du protecteur d'angle de la figure 2 ;
- la figure 6 est une vue en perspective illustrant les corps extérieur et intérieur du protecteur de la figure 2, après assemblage et sans la corbeille, pour plus de clarté ;
- la figure 7 est une vue partielle en perspective de dessous montrant une butée à l'extrémité inférieure du protecteur d'angle ;
- la figure 8 est une vue partielle en perspective montrant un protecteur d'angle selon un deuxième mode de réalisation fixé sur une corbeille de chariot d'achat ;
- la figure 9 est une vue en perspective montrant le corps extérieur allongé du protecteur d'angle de la figure 8 ;
- la figure 10 est une vue en perspective illustrant les corps extérieur et intérieur du protecteur d'angle de la figure 8, après assemblage et sans la corbeille, pour plus de clarté ;
- les figures 11 à 17A et 17B montrent des coupes transversales de variantes de section du protecteur d'angle selon le deuxième mode de réalisation illustré sur les figures 8 à 10 ;
- les figures 18 et 19 montrent des coupes transversales de variantes de section du protecteur d'angle selon le premier mode de réalisation illustré sur les figures 2 à 7 ;
- les figures 20 à 22 sont des vues en perspectives illustrant le procédé de fabrication du protecteur d'angle selon l'invention et la machine-outil pour la mise en oeuvre de ce procédé de fabrication.

Dans les figures, les éléments identiques ou équivalents porteront les mêmes signes de référence.

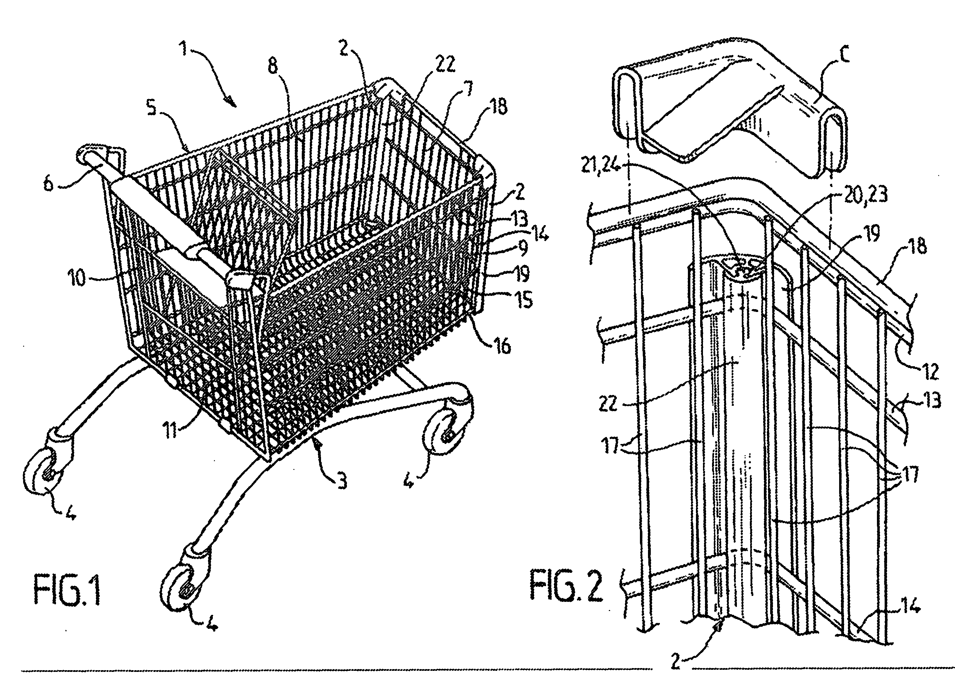

La figure 1 montre un chariot d'achat encastrable 1 pourvu de deux protecteurs d'angle 2 selon l'invention. Ce chariot d'achat comporte de manière classique en soi un châssis 3 monté sur des roulettes 4 et portant une corbeille de transport 5 surmontée à son extrémité arrière par une poignée de manoeuvre 6.

La corbeille comporte une paroi avant 7, deux parois latérales 8, 9, une paroi arrière montée basculante 10, et un fond 11. Toutes les parois 7 à 10 sont composées de fils métalliques horizontaux et verticaux entrecroisés et reliés ensemble par soudage. Les fils horizontaux 12, 13, 14, 15, 16 s'étendent à des niveaux différents pour former les parois latérales 8, 9 et la paroi avant 7 tout en étant reliés les uns aux autres par des fils verticaux désignés 17 dans leur ensemble. Les fils horizontaux 12 à 16 passent à l'extérieur des fils verticaux 15 et sont pour cette raison appelés fils de ceinture.

Dans l'exemple illustré, un fil horizontal 18 de plus grande dimension est superposé sur le fil supérieur 12 (voir figure 2) de manière à former un cadre protégeant contre les extrémités hautes des fils verticaux 17.

Une coiffe C est de manière classique en soi disposée aux angles avant de la corbeille 5. Elle présente une section en U tournée vers le bas de manière à recevoir par encliquetage à cet endroit les fils horizontaux 12 et 18.

Le chariot d'achat 1 de la figure 1 est pourvu de deux protecteurs d'angle 2 selon l'invention dont un premier mode de réalisation sera maintenant décrit en référence aux figures 2 à 7.

Un protecteur d'angle 2 est disposé à chacun des angles formés par la paroi avant 7 et les parois latérales respectives 8, 9 de la corbeille 5. Chaque protecteur d'angle comprend un corps allongé dit extérieur 19 disposé verticalement à l'extérieur de l'angle correspondant. Ce corps extérieur 19 s'étend sur sensiblement toute la hauteur de l'angle de la corbeille 5 pour former un organe de protection extérieur, de celle-ci qui fait fonction de pare-chocs. Il présente en coupe une forme incurvée et recouvre une partie de la paroi avant 7 et de la paroi latérale correspondante (8 ou 9) à proximité de l'angle.

Le corps extérieur 19 est fixé à l'angle de la corbeille 5 et comporte pour sa fixation des premiers moyens de liaison 20 coopérant avec des deuxièmes moyens de liaison 21 disposés à l'intérieur de la corbeille. Selon l'invention, ces deuxièmes moyens de liaison 21 sont prévus sur un corps allongé dit intérieur 22 s'étendant sensiblement sur toute la hauteur de l'angle. Dans l'exemple illustré sur les figures 1 et 2, les premiers et deuxièmes moyens de liaison 20, 21 emprisonnent quatre des fils horizontaux, à savoir les fils 13 à 16.

Les premiers et deuxièmes moyens de liaison 20, 21 présentent une forme complémentaire. Dans le premier mode de réalisation, les premiers moyens de liaison 20 sont constitués par un organe femelle formé par une rainure médiane 23 effectuée dans le corps extérieur 19 du protecteur d'angle 2 et s'étendant sur toute la longueur de ce corps. Les deuxièmes moyens de liaison 21 sont constitués par un organe mâle formé par une nervure médiane 24 prévue sur corps intérieur 22 du protecteur d'angle 2 et s'étendant sur toute la longueur de ce corps.

Le corps extérieur 19 du protecteur d'angle 2 comporte sur sa face intérieure des encoches 25 longitudinalement espacées traversant perpendiculairement la rainure 23 du corps extérieur 19. Ces encoches 25 sont adaptées pour recevoir les fils horizontaux 13 à 16 de la corbeille 5. Le corps extérieur 19 est fixé à l'angle en introduisant la nervure 24 du corps intérieur 22 de dessus dans la rainure 23 du corps extérieur 19 de manière à emprisonner les fils horizontaux 13 à 16 entre ces deux éléments.

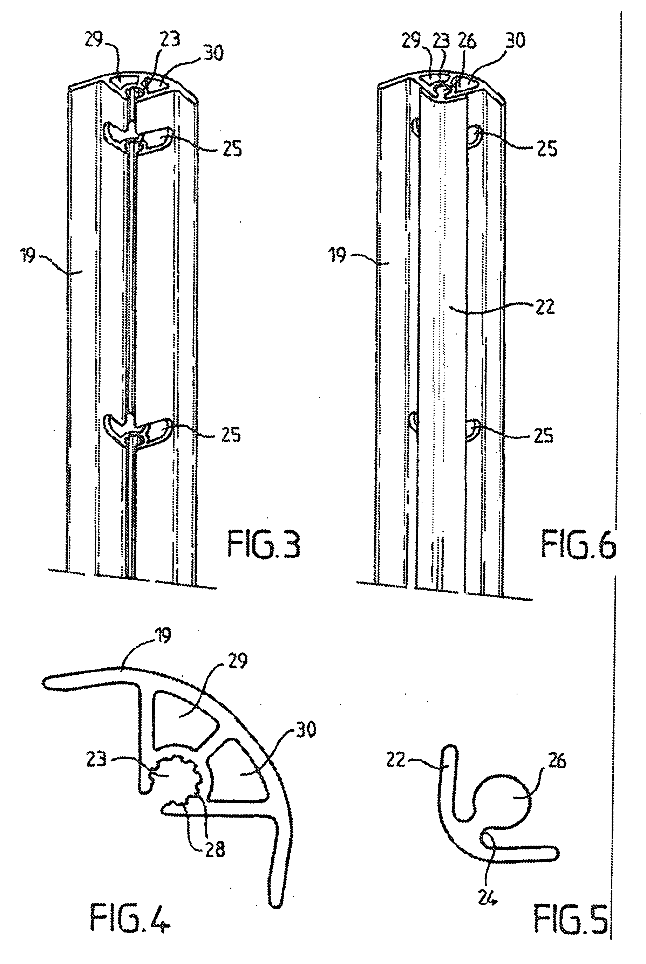

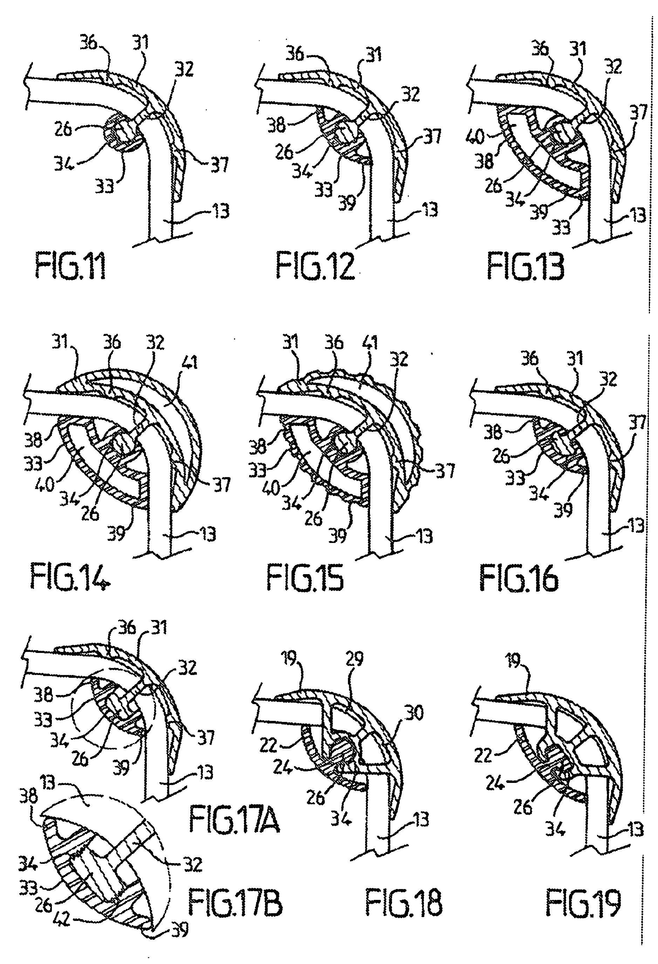

Ledit organe mâle 24 présente avantageusement à son extrémité libre un élargissement formant un organe d'ancrage 26 comme cela est illustré aux figures 18 et 19 en relation avec ce premier mode de réalisation. Cet organe d'ancrage peut, en section, présenter une forme bombée comme par exemple en champignon ou globalement circulaire en section (voir figures 5 et 18), ou bien présenter en section une forme en T (voir figure 19).

Lors de cet assemblage du corps intérieur 22 avec le corps extérieur 19, on engage la nervure 24 dans la rainure 23 de dessus et on déplace tout simplement le corps intérieur 22 vers le bas en laissant glisser la nervure 24 à l'intérieur de la rainure 23 jusqu'à ce que le corps intérieur soit placé au niveau souhaité et retenu à une hauteur prédéterminée à l'aide d'un moyen de retenu.

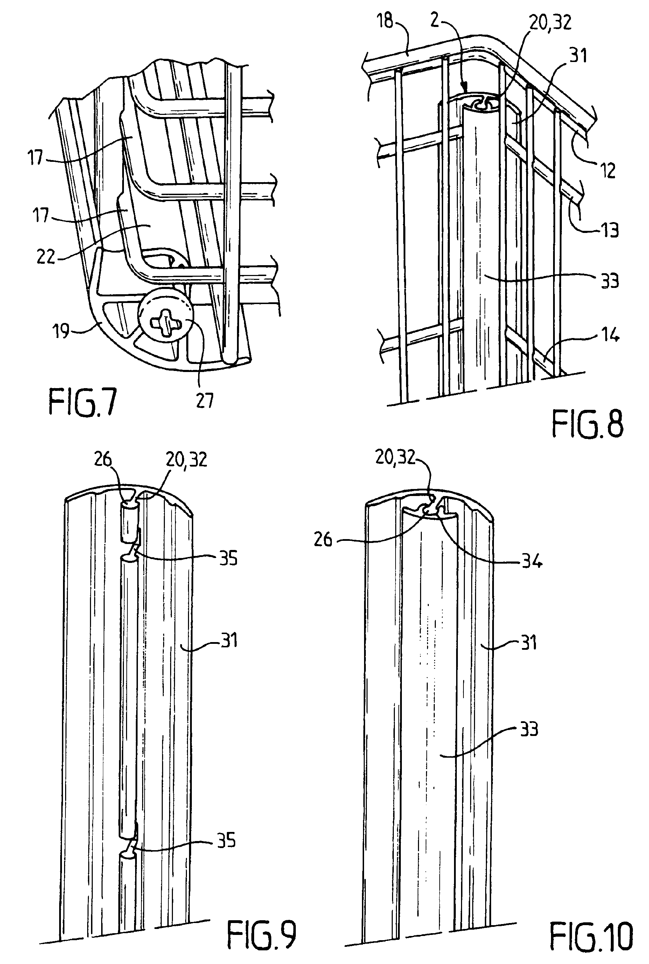

Ce moyen de retenu comporte dans l'exemple illustré une butée sous forme de la tête d'une vis 27 disposé à l'extrémité inférieure du corps extérieur 19 du protecteur d'angle la partie filetée de la vis étant vissée dans la nervure 24 (voir figure 7).

Le moyen de retenu à une hauteur prédéterminée du corps intérieur 22 peut avantageusement comprendre une colle (non représentée) qui peut être combinée ou non avec une butée, éventuellement provisoire pour le temps de la prise de la colle, en bas du protecteur d'angle 2.

Pour faciliter le glissement de la nervure 24 par rapport à l'intérieur de la rainure 23, cette dernière peut avantageusement être pourvue de cannelures longitudinales 28 qui réduisent la surface de contact entre la rainure et la nervure.

Ce mode d'assemblage permet l'utilisation d'un matériau relativement rigide pour la fabrication des corps intérieur 22 et extérieur 19, ce qui améliore la tenue de l'assemblage. Cependant, cela n'exclut pas l'assemblage des corps intérieur 22 et extérieur 19 par encliquetage, à condition qu'au moins un de ces corps, et de préférence le corps pourvu de la rainure, soit fabriqué en un matériau suffisamment élastique pour permettre l'introduction latérale de la nervure 24 dans la rainure 23 par déformation élastique.

Les figures 2 à 4 montrent que le corps extérieur 19 est pourvu de deux alvéoles 29, 30 symétriquement disposées autour du centre du corps en s'étendant sur toute la longueur de celui-ci.

Les corps extérieur et intérieur 19, 22 sont de préférence fabriqués en une matière plastique présentant une certaine flexibilité pour amortir les chocs. Ils sont selon une caractéristique de l'invention fabriqués à partir de profilés extrudés et ensuite repris pour y effectuer les encoches 25 de réception de fils horizontaux. Les alvéoles 29, 30 sont facilement obtenues grâce à l'extrusion et servent d'une part à augmenter la flexibilité du corps extérieur 19 et d'autre part à économiser de la matière et rendre les profilés plus légers.

Le procédé de fabrication des corps extérieur et intérieur 19, 22 par extrusion sera décrit en détail plus loin. Même si ce procédé de fabrication est un procédé de fabrication préféré selon l'invention, les corps extérieur et intérieur 19, 22 pourraient bien entendu être obtenus par tout autre procédé approprié comme par exemple le moulage par injection.

Maintenant, il est fait référence aux figures 8 à 17 qui montre un deuxième mode de réalisation de l'invention. Ce deuxième mode de réalisation diffère du premier mode de réalisation qui vient d'être décrit par le fait que l'organe femelle et l'organe mâle constituant les moyens de liaison sont inversés, c'est-à-dire que les premiers moyens de liaison 20 portés par le corps extérieur, ici désigné 31, du protecteur d'angle 2 sont constitués par une nervure 32 formant un organe mâle, alors que les deuxièmes moyens de liaison 21 portés par le corps intérieur, ici désigné 33, sont constitués d'une rainure 34 formant un organe femelle.

Des encoches 35 de réception des fils horizontaux 13 à 16 de la corbeille 5 sont effectuées dans les premiers moyens de liaison 20 du corps extérieur 31, c'est-à-dire que ces encoches traversent perpendiculairement la nervure 32 (voir figure 9).

La nervure 32 présente comme dans le premier mode de réalisation à son extrémité libre un élargissement formant un organe d'ancrage 26.

La nervure 32 et la rainure 34 ont des formes complémentaires et le corps extérieur 31 et le corps intérieur 33 sont assemblés d'une manière similaire à celle déjà décrite en référence au premier mode de réalisation.

Les figures 11 à 17 montrent des variantes de section des corps extérieur 31 et intérieur 33 de ce deuxième mode de réalisation.

Dans les figures 11 à 17, le corps extérieur 31 du protecteur d'angle 2 comporte sur sa face intérieure deux nervures longitudinales 36, 37 symétriquement disposées de part et d'autre de l'organe mâle 32 de manière à améliorer la flexibilité du corps extérieur 31 lorsque ces nervures sont en appui contre les fils horizontaux 13 à 16 de la corbeille 5.

Dans les variantes de section représentées aux figures 11 à 16, l'organe d'ancrage 26 sur l'organe mâle 32 présente une forme bombée en section qui dans les figures 11 à 15 est pratiquement circulaire, alors que dans la figure 16, elle ressemble à un champignon. L'organe femelle 34 du corps intérieur 33 présente une forme complémentaire.

Dans la figure 11, le corps intérieur 33 du protecteur d'angle 2 présente une forme en section sensiblement circulaire, alors que dans les figures 12 à 17, il présente une forme en arc de cercle créant deux ailes 38, 39 disposées de part et d'autre de la partie centrale du corps intérieur et dont les extrémités viennent en appui contre les fils horizontaux 13 à 16 de la corbeille 5.

Les figures 13 à 15 montrent des variantes dans lesquelles le corps intérieur 33 du protecteur d'angle 2 est pourvu d'une alvéole longitudinale centrale 40 reprenant sensiblement la forme du contour du corps et s'étendant sur toute la longueur de celui-ci pour améliorer la flexibilité de cet élément.

De la même manière et pour la même raison, le corps extérieur 31 du protecteur d'angle 2 est dans les variantes illustrées aux figures 14 et 15 pourvu d'une alvéole centrale 41.

La figure 17A montre encore une variante de l'organe d'ancrage 26 sur l'organe mâle 32 du corps intérieur 33 du protecteur d'angle. Dans cette variante, l'organe d'ancrage 26 a globalement en section une forme en T. La figure 17B est un agrandissement d'une partie de la figure 17B et montre que l'organe d'ancrage en T est sur sa périphérie pourvu d'un crantage 42.

Selon une autre variante non représentée sur les figures, le corps extérieur peut sur sa face extérieure être pourvu d'une peau en mousse assurant un effet amortisseur. Dans ce cas, la peau en mousse peut avantageusement être obtenue par co-extrusion d'un profilé bi-matière.

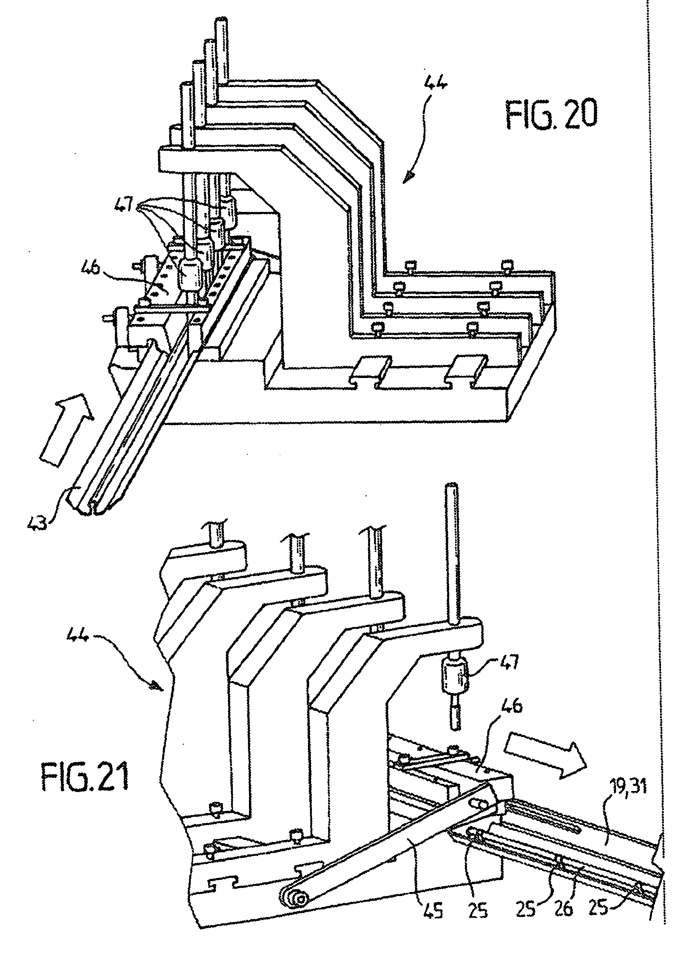

Les figures 20 à 21 illustrent le procédé de fabrication du protecteur d'angle et plus particulièrement la fabrication d'un corps extérieur similaire à celui illustré à la figure 9.

Selon l'invention, aussi bien le corps extérieur 19, 31 que le corps intérieur 22, 33 du protecteur d'angle 2 sont obtenus à partir de profilés extrudés.

Pour la fabrication du corps intérieur 22, 33 du protecteur d'angle 2, il suffit de d'extruder un profilé en matière plastique et le couper en longueurs déterminées adaptées à la hauteur de la corbeille 5.

Pour la fabrication du corps extérieur 19, 31 du protecteur d'angle 2, on commence par extruder un profilé 43. Suite à son extrusion, ce profilé est repris pour y effectuer des encoches 25 longitudinalement espacées et adaptées pour recevoir un fil horizontal respectif 13 à 16 de la corbeille 5 d'un chariot d'achat 1.

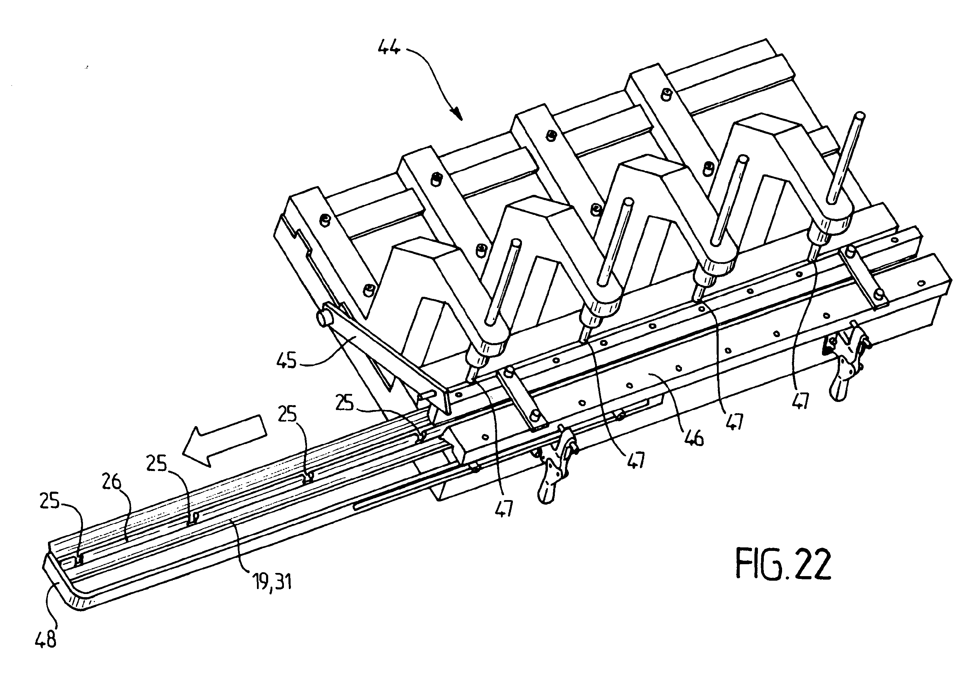

Les figures 20 à 22 montrent une machine-outil 44 apte à effectuer l'ensemble des opérations de fabrication du corps extérieur 19, 31 du protecteur d'angle 2 à partir du profilé extrudé 43. Le sens d'alimentation du profilé 43 dans la machine-outil 44 est montré par des flèches sur ces figures.

Le profilé 43 est introduit dans la machine-outil 44 de la manière illustré à la figure 20 en suivant un guidage prévu sur la table de la machine. Le profilé y est avancé jusqu'à une butée qui peut être constituée par une lame de coupe 45 du côté opposé de la machine. Ensuite, le profilé 43 est serré contre la table à l'aide d'un dispositif de serrage 46 afin de permettre à une série de fraises 47 d'effectuer des encoches 25 dans le profilé 43. Comme déjà mentionné, ces encoches sont destinées à recevoir des fils horizontaux de la corbeille 5 d'un chariot d'achat 1 lors du montage du protecteur d'angle 2 sur celui-ci.

Ces fraises 47 travaillent simultanément pour effectuer les encoches 25 et ensuite le dispositif de serrage 46 libère le profilé et la lame de coupe formant butée 45 est escamotée pour permettre le déplacement du profilé 43 vers une deuxième butée 48 disposée de manière à définir une distance jusqu'à la lame du coupe 45 qui correspond à la longueur déterminée du corps extérieur fini 19 (ou 31) du protecteur d'angle 2.

Ensuite, la lame de coupe 45 est abaissée pour couper le profilé 43 et séparant le corps extérieur fini. Au début de cette opération de coupe, les fraises 47 attaquent déjà la longueur suivante du profilé 43 qui est préalablement serré par le dispositif de serrage 46. La lame de coupe 45 est de nouveau soulevée afin de permettre le déplacement de la longueur suivante du profilé vers la deuxième butée 48.

Ce cycle de travail se répète jusqu'à ce que la découpe du profilé 43 soit terminée. Ensuite le profilé suivant 43 est introduit dans la machine-outil 44 et les cycles de travail recommencent. En générale, un profilé 43 suffit pour la fabrication de 4 ou 5 corps extérieurs 19 (31).

Le procédé de fabrication selon l'invention est simple à mettre en oeuvre et la machine-outil utilisée peut facilement être réglée pour la fabrication de protecteurs d'angle de longueurs adaptées à des chariots de modèles et de tailles différents. Il suffit pour cela de redéfinir l'emplacement des fraises 47 et de la deuxième butée 48.

## Revendications

1. Protecteur d'angle pour chariot d'achat, comprenant un corps allongé dit extérieur (19, 31) apte à être disposé verticalement à l'extérieur d'un angle formé par une paroi avant (7) et une paroi latérale (8, 9) d'une corbeille de chariot (5) composée de fils métalliques horizontaux (12 à 16) et verticaux (17), ledit corps extérieur (19 ; 31) étant adapté pour être fixé à l'angle de manière à former un organe de protection extérieur de la corbeille (5) et étant pour sa fixation à l'angle pourvu de premiers moyens de liaison (20) aptes à coopérer avec des deuxièmes moyens de liaison (21) devant être disposés à l'intérieur de la corbeille (5) pour fixer ledit corps extérieur (19 ; 31) en emprisonnant au moins deux desdits fils métalliques horizontaux (12 à 16) s'étendant dans l'angle à des hauteurs différentes, **caractérisé par le fait que** lesdits deuxièmes moyens de liaison (21) sont disposés sur un corps allongé (22 ; 33) dit intérieur s'étendant sensiblement sur toute la hauteur de l'angle de manière à former un organe de protection intérieur de la corbeille (5).

2. Protecteur d'angle selon la revendication 1, **caractérisé par le fait que** ledit corps extérieur (19 ; 31) comporte sur sa face intérieure des encoches (25) longitudinalement espacées traversant perpendiculairement lesdits premiers moyens de liaison (20) et adaptées pour recevoir des fils horizontaux (13 à 16) de la corbeille (5) s'étendant à des hauteurs différentes de celle-ci.

3. Protecteur d'angle selon la revendication 1 ou 2, **caractérisé par le fait que** lesdits premiers (20) et deuxièmes (21) moyens de liaison sont formés par un organe mâle (24 ; 32) et un organe femelle (23 ; 34) de forme complémentaire s'étendant sensiblement sur toute la longueur desdits corps extérieur (19 ; 31) et intérieur (22 ; 33).

4. Protecteur d'angle selon la revendication 3, **caractérisé par le fait que** ledit organe mâle (24 ; 32) présente à son extrémité libre un élargissement formant un organe d'ancrage (26).

5. Protecteur d'angle selon la revendication 4, **caractérisé par le fait que** ledit organe d'ancrage (26) est globalement bombé en section.

6. Protecteur d'angle selon la revendication 4, **caractérisé par le fait que** ledit organe d'ancrage (26) a globalement une forme en T en section.

7. Protecteur d'angle selon la revendication 6, **caractérisé par le fait que** ledit organe d'ancrage (26) comporte sur sa périphérie un crantage (42).

8. Protecteur d'angle selon l'une quelconque des revendications 3 à 7, **caractérisé par le fait que** l'organe mâle (24 ; 32) est apte à être introduit dans l'organe femelle (23 ; 34) et retenu à une hauteur prédéterminée à l'intérieur de ce dernier à l'aide d'un moyen de retenu (27).

9. Protecteur d'angle selon la revendication 8, **caractérisé par le fait que** ledit moyen de retenu comporte de la colle.

10. Protecteur d'angle selon la revendication 8 ou 9, **caractérisé par le fait que** ledit moyen de retenu (27) comporte une butée à l'extrémité inférieure du protecteur.

11. Protecteur d'angle selon l'une quelconque des revendications 3 à 10, **caractérisé par le fait que** ledit organe mâle (24) est prévu sur ledit corps extérieur (19 ; 31) et que ledit organe femelle (23) est prévu sur ledit corps intérieur (22).

12. Protecteur d'angle selon l'une quelconque des revendications 3 à 10, **caractérisé par le fait que** ledit organe femelle (34) est prévu sur ledit corps extérieur (31) et que ledit organe mâle (32) est prévu sur ledit corps intérieur (33).

13. Protecteur d'angle selon l'une quelconque des revendications précédentes, **caractérisé par le fait que** ledit corps extérieur (19 ; 31) comporte au moins une alvéole (29, 30) s'étendant sur toute sa longueur.

14. Protecteur d'angle selon l'une quelconque des revendications précédentes, **caractérisé par le fait que** ledit corps intérieur (22 ; 33) comporte au moins une alvéole (40) s'étendant sur toute sa longueur.

15. Protecteur d'angle selon l'une quelconque des revendications précédentes, **caractérisé par le fait que** lesdits corps extérieur (19 ; 31) et intérieur (22 ; 33) sont obtenus à partir de profilés extrudés (43).

16. Chariot d'achat comportant un châssis monté sur des roulettes et portant une corbeille (5) de transport composée de fils métalliques horizontaux (12 à 16) et verticaux (17) reliés ensemble, la corbeille (5) présentant des angles avant protégés par un protecteur d'angle respectif (2), **caractérisé par le fait que** le protecteur d'angle (2) est un protecteur d'angle selon l'une quelconque des revendications 1 à 15.

17. Procédé de fabrication d'un protecteur d'angle selon l'une quelconque des revendications 1 à 15, **caractérisé par le fait qu'**il comprend les phases consistant à :
- extruder un profilé (43) apte à former ledit corps intérieur (22 ; 33) du protecteur d'angle (2) et couper le profilé (43) en longueurs déterminées adaptées à la hauteur de ladite corbeille (5) d'un chariot d'achat (1);
- extruder un profilé (43) apte à former ledit corps extérieur (19 ; 31) du protecteur d'angle (2);
- effectuer des encoches (25) longitudinalement espacées dans le profilé (43) formant le corps extérieur (19 ; 31), les encoches (25) étant adaptées pour recevoir un fil horizontal respectif (13 à 16) d'une corbeille (5) de chariot ;
- couper le profilé (43) formant le corps extérieur (19 ; 31) en longueurs déterminées adaptées à la hauteur de ladite corbeille (5) de chariot d'achat.

## Claims

1. A protective corner bumper for a shopping cart, comprising an elongated body, a so-called outer body (19; 31) capable of being positioned vertically on the outside of a corner formed by a front wall (7) and a side wall (8,9) of a cart basket (5) consisting of horizontal (12 to 16) and vertical (17) metal wires, said outer body (19; 31) being adapted so as to be attached to the corner so as to form an outer protective member of the basket (5) and for its attachment to the corner being provided with first connecting means (20) capable of cooperating with second connecting means (21), which have to be positioned inside the basket (5) in order to attach said outer body (19; 31) by confining at least two of said horizontal metal wires (12 to 16), extending in the corner at different heights, **characterized by** the fact that said second connection means (21) are positioned on an elongated body (22; 33), a so-called inner body, substantially extending over the whole height of the corner so as to form an inner protective member of the basket (5).

2. The protective corner bumper according to claim 1, **characterized by** the fact that said outer body (19; 31) includes on its inner face longitudinally spaced-out notches (25) crossing perpendicularly said first connecting means (20) and adapted for receiving horizontal wires (13 to 16) of the basket (5), extending at different heights of the latter.

3. The protective corner bumper according to claim 1 or 2, **characterized by** the fact that said first (20) and second (21) connection means are formed by a male member (24; 32) and by a female member (23; 34) of a mating shape substantially extending over the whole length of said outer (19; 31) and inner (22; 33) bodies.

4. The protective corner bumper according to claim 3, **characterized by** the fact that said male member (24; 32) has at its free end a widened portion forming an anchoring member (26).

5. The protective corner bumper according to claim 4, **characterized by** the fact that said anchoring member (26) is globally convex in section.

6. The protective corner bumper according to claim 4, **characterized by** the fact that said anchoring member (26) is globally T-shaped in section.

7. The protective corner bumper according to claim 6, **characterized by** the fact that said anchoring member (26) includes on its periphery a succession of notches (42).

8. The protective corner bumper according to any of claims 3 to 7, **characterized by** the fact that the male member (24; 32) is capable of being introduced into the female member (23; 34) and retained at a predetermined height inside the latter with a retaining means (27).

9. The protective corner bumper according to claim 8, **characterized by** the fact that said retaining means (27) includes an adhesive.

10. The protective corner bumper according to claim 8 or 9, **characterized by** the fact that said retaining means (27) includes an abutment at the lower end of the protective bumper.

11. The protective corner bumper according to any of claims 3 to 10, **characterized by** the fact that said male member (24) is provided on said outer body (19; 31) and that said female member (23) is provided on said inner body (22).

12. The protective corner bumper according to any of claims 3 to 10, **characterized by** the fact that said female member (34) is provided on said outer body (31) and that said male member (32) is provided on said inner body (33).

13. The protective corner bumper according to any of the preceding claims, **characterized by** the fact that said outer body (19; 31) includes at least one cell (29, 30) extending over the whole of its length.

14. The protective corner bumper according to any of the preceding claims, **characterized by** the fact that said inner body (22; 33) includes at least one cell (40) extending over the whole of its length.

15. The protective corner bumper according to any of the preceding claims, **characterized by** the fact that said outer (19; 31) and inner (22; 33) bodies are obtained from extruded profiles (43).

16. A shopping cart including a chassis mounted on casters and bearing a transport basket (5) consisting of horizontal (12 to 16) and vertical (17) metal wires connected together, the basket (5) having front corners protected by a respective protective corner bumper (2), **characterized by** the fact that the protective corner bumper (2) is a protective corner bumper according to any of claims 1 to 15.

17. A method for manufacturing a protective corner bumper according to any of claims 1 to 15, **characterized by** the fact that it comprises the phases of:
- extruding a profile (43) capable of forming said inner body (22; 33) of the protective corner bumper (2) and cutting the profile (43) into determined lengths adapted to the height of said basket (5) of a shopping cart (1);
- extruding a profile (43) capable of forming said outer body (19; 31) of the protective corner bumper (2);
- making notches (25) longitudinally spaced out in the profile (43) forming the outer body (19; 31), the notches (25) being adapted for receiving a respective horizontal wire (13 to 16) of a shopping cart basket (5);
- cutting the profile (43) forming the outer body (19; 31), into determined lengths adapted to the height of said shopping cart basket (5).

## Patentansprüche

1. Eckenschutz für Einkaufswagen, der einen sogenannten äußeren länglichen Körper (19, 31) umfasst, der imstande ist, vertikal außerhalb einer Ecke, die von einer Vorderwand (7) und einer Seitenwand (8, 9) eines Wagenkorbs (5) gebildet wird, der aus horizontalen (12 bis 16) und vertikalen (17) Metalldrähten zusammengesetzt ist, angeordnet zu sein, wobei der äußere Körper (19; 31) geeignet ist, derart an der Ecke befestigt zu sein, dass er ein äußeres Schutzorgan des Korbs (5) bildet und für seine Befestigung an der Ecke mit ersten Verbindungsmitteln (20) ausgestattet ist, die imstande sind, mit zweiten Verbindungsmitteln (21) zusammenzuarbeiten, die innerhalb des Korbs (5) angeordnet sein müssen, um den äußeren Körper (19; 31) zu befestigen, wobei dabei mindestens zwei der horizontalen Metalldrähte (12 bis 16) eingeschlossen werden, die sich in der Ecke in unterschiedlichen Höhen erstrecken, **dadurch gekennzeichnet, dass** die zweiten Verbindungsmittel (21) auf einem sogenannten inneren länglichen Körper (22; 33) angeordnet sind, der sich etwa über die gesamte Höhe der Ecke derart erstreckt, dass er ein inneres Schutzorgan des Korbs (5) bildet.

2. Eckenschutz nach Anspruch 1, **dadurch gekennzeichnet, dass** der äußere Körper (19; 31) auf seiner Innenseite länglich beabstandete Kerben (25) aufweist, die die ersten Verbindungsmittel (20) senkrecht durchqueren und geeignet sind, horizontale Drähte (13 bis 16) des Korbs (5) aufzunehmen, die sich in unterschiedlichen Höhen desselben erstrecken.

3. Eckenschutz nach Anspruch 1 oder 2, **dadurch gekennzeichnet, dass** die ersten (20) und zweiten (21) Verbindungsmittel von einem männlichen Organ (24; 32) und einem weiblichen Organ (23; 34) komplementärer Form gebildet werden, die sich etwa über die gesamte Länge des äußeren (19; 31) und inneren (22; 33) Körpers erstrecken.

4. Eckenschutz nach Anspruch 3, **dadurch gekennzeichnet, dass** das männliche Organ (24; 32) an seinem freien Ende eine Erweiterung aufweist, die ein Verankerungsorgan (26) bildet.

5. Eckenschutz nach Anspruch 4, **dadurch gekennzeichnet, dass** das Verankerungsorgan (26) im Schnitt allgemein gewölbt ist.

6. Eckenschutz nach Anspruch 4, **dadurch gekennzeichnet, dass** das Verankerungsorgan (26) im Schnitt eine T-Form hat.

7. Eckenschutz nach Anspruch 6, **dadurch gekennzeichnet, dass** das Verankerungsorgan (26) auf seinem Umfang eine Verzahnung (42) aufweist.

8. Eckenschutz nach einem der Ansprüche 3 bis 7, **dadurch gekennzeichnet, dass** das männliche Organ (24; 32) imstande ist, in das weibliche Organ (23; 34) eingeführt und in einer vorbestimmten Höhe innerhalb dieses Letztgenannten mit Hilfe eines Haltemittels (27) gehalten zu werden.

9. Eckenschutz nach Anspruch 8, **dadurch gekennzeichnet, dass** das Halteorgan Klebstoff aufweist.

10. Eckenschutz nach Anspruch 8 oder 9, **dadurch gekennzeichnet, dass** das Halteorgan (27) am unteren Ende des Schutzes einen Anschlag aufweist.

11. Eckenschutz nach einem der Ansprüche 3 bis 10, **dadurch gekennzeichnet, dass** das männliche Organ (24) auf dem äußeren Körper (19; 31) vorgesehen ist und dass das weibliche Organ (23) auf dem inneren Körper (22) vorgesehen ist.

12. Eckenschutz nach einem der Ansprüche 3 bis 10, **dadurch gekennzeichnet, dass** das weibliche Organ (34) auf dem äußeren Körper (31) vorgesehen ist und dass das männliche Organ (32) auf dem inneren Körper (33) vorgesehen ist.

13. Eckenschutz nach einem der vorangehenden Ansprüche, **dadurch gekennzeichnet, dass** der äußere Körper (19; 31) mindestens eine Wabenzelle (29, 30) ausweist, die sich über seine gesamte Länge erstreckt.

14. Eckenschutz nach einem der vorangehenden Ansprüche, **dadurch gekennzeichnet, dass** der innere Körper (22; 33) mindestens eine Wabenzelle (40) aufweist, die sich über seine gesamte Länge erstreckt.

15. Eckenschutz nach einem der vorangehenden Ansprüche, **dadurch gekennzeichnet, dass** der äußere (19; 31) und innere (22, 33) Körper aus extrudierten Profilen (43) hergestellt sind.

16. Einkaufswagen, der ein auf Rollen montiertes Fahrgestell aufweist und einen Transportkorb (5) trägt, der aus gemeinsam verbundenen horizontalen (12 bis 16) und vertikalen (17) Metalldrähten zusammengesetzt ist, wobei der Korb (5) vordere Ecken aufweist, die von einem jeweiligen Eckenschutz (2) geschützt sind, **dadurch gekennzeichnet, dass** der Eckenschutz (2) ein Eckenschutz nach einem der Ansprüche 1 bis 15 ist.

17. Verfahren zur Herstellung eines Eckenschutzes nach einem der Ansprüche 1 bis 15, **dadurch gekennzeichnet, dass** es die Phasen umfasst, die bestehen im:
- Extrudieren eines Profils (43), das imstande ist, den inneren Körper (22; 33) des Eckenschutzes (2) zu bilden und Zuschneiden des Profils (43) in bestimmt Längen, die an die Höhe des Korbs (5) eines Einkaufswagen (1) angepasst sind,
- Extrudieren eines Profils (43), das imstande ist, den äußeren Körper (19; 31) des Eckenschutzes (2) zu bilden,
- Einarbeiten der länglich beabstandeten Kerben (25) in das den äußeren Körper (19; 31) bildende Profil (43), wobei die Kerben (25) geeignet sind, einen jeweiligen horizontalen Draht (13 bis 16) eines Korbs (5) des Wagens aufzunehmen,
- Zuschneiden des den äußeren Körper (19; 31) bildenden Profils (43) in bestimmte Längen, die an die Höhe des Korbs (5) des Einkaufswagens angepasst sind.
